(19) Europäisches Patentamt
European Patent Office
Office européen des brevets

(11) **EP 1 890 112 B1**

(12) **EUROPÄISCHE PATENTSCHRIFT**

(45) Veröffentlichungstag und Bekanntmachung des Hinweises auf die Patenterteilung:
**06.09.2017   Patentblatt 2017/36**

(51) Int Cl.:
***G01C 21/36*** *(2006.01)*

(21) Anmeldenummer: **07111693.3**

(22) Anmeldetag: **04.07.2007**

(54) **Verfahren zum Darstellen von Objektinformation und Navigationssystem hierfür**

Method for displaying object information and navigation system therefor

Procédé destiné à l'affichage d'informations concernant des objets et système de navigation correspondant

(84) Benannte Vertragsstaaten:
**DE FR GB IT**

(30) Priorität: **17.08.2006   DE 102006038551**

(43) Veröffentlichungstag der Anmeldung:
**20.02.2008   Patentblatt 2008/08**

(73) Patentinhaber: **ROBERT BOSCH GMBH**
**70442 Stuttgart (DE)**

(72) Erfinder: **Mueller, Guido**
**06484, Quedlinburg (DE)**

(56) Entgegenhaltungen:
**EP-A- 1 643 214        DE-A1-102005 020 154**
**DE-C1- 19 741 149    JP-A- 9 259 386**
**US-A- 5 293 163**

**Beschreibung**

Die vorliegende Erfindung betrifft ein Verfahren zum Darstellen von Objektinformation zu Kartendaten einer digitalisierten Karte für ein Navigationssystem, bei dem aktuelle Positionsdaten erfasst werden und anhand der Positionsdaten, der Kartendaten und der Objektinformation darstellbare Anzeigedaten erstellt und angezeigt werden. Die vorliegende Erfindung betrifft ferner ein Navigationssystem zum Durchführen des Verfahrens.

Navigationssysteme haben in den letzten Jahren eine weite Verbreitung gefunden und sind hinlänglich bekannt. Zur Vereinfachung der Zielführung werden hierbei vielfach auf einem Bildschirm Kartenausschnitte dargestellt, die neben den reinen Straßenverläufen zusätzlich durch topografische Information, beispielsweise Gewässer, bebaute Gebiete, Eisenbahnen und/oder Wälder, die Orientierung für den Nutzer erleichtern.

In Navigationssystemen mit einer Kartendarstellung erfolgt in dieser oftmals neben der Routenpräsentation auch eine Anzeige bzw. Bezeichnung von Straßennamen und/oder Straßennummern, beispielsweise A7 für eine Autobahn oder B1 für eine Bundesstraße, sowie von Markierungen von politischen Gebieten oder auch von so genannten Point-of-Interest (POI), beispielsweise von Raststätten, Tankstellen und/oder Polizeiwachen. Diese Zusatzinformation kann als Text oder als Piktogramm angezeigt werden.

Bei der Anzeige dieser Informationen bzw. Markierungen in der Karte sind die Beschriftungs- bzw. Markierungspunkte insbesondere bei Gebieten und Point-of-Interest in den Daten der digitalisierten Karte vorbestimmt oder werden durch die Applikation ermittelt. Die vordefinierten Markierungspunkte von politischen Flächen sind zumeist Ortszentren und sind für eine sinnvolle Kartenanzeige nach diesem Verfahren unerlässlich.

Die Berechnung der Markierungspunkte durch die Applikation erfolgt zurzeit maßgeblich anhand der Klassifikation der Straßen sowie der Bedeutung der zu markierenden bzw. der zu bezeichnenden Kartenelemente. Es werden somit vorzugsweise die wichtigen Elemente markiert bzw. beschriftet, während die eher unwichtigen Elemente nicht beschriftet werden. Dabei werden Verdeckungen vermieden und bei der Darstellung des anzeigten Kartenausschnittes wird ferner berücksichtigt, dass eine gute Erkennbarkeit für den Nutzer garantiert wird.

Dieses Verfahren berücksichtigt jedoch nicht die Relevanz von Straßen für den Fahrer, so dass in vielen Fällen Elemente markiert bzw. bezeichnet werden, die den Fahrer im weiteren Verlauf seiner Wegstrecke bei einem Befolgen der berechneten Fahrtroute eigentlich nicht interessieren.

Da ferner in einem Fahrzeug oftmals nur Bildschirme von begrenzter Größe zur Verfügung stehen, können nicht alle Informationen dargestellt werden, ohne dass eine Gefahr besteht, dass die Darstellung des Kartenausschnittes unübersichtlich wird. Deshalb wird in der DE 103 37 844 A1 eine Navigationsvorrichtung vorgestellt, bei der in einer Anzeigeeinheit an die berechnete Fahrtroute grenzende Objekte gegenüber übrigen Objekten in der Fahrzeugumgebung hervorgehoben dargestellt sind, so dass die Anzeige auch bei einer Vielzahl dargestellter Information übersichtlicher wird. Bei dieser Lösung ist die Kenntnis der berechneten Fahrtroute zur Auswahl und Bestimmung derjenigen Objekte unerlässlich, die durch eine geeignete Hervorhebung auffälliger für den Nutzer dargestellt werden sollen.

Vor diesem Hintergrund ist es die Aufgabe der Erfindung, dem Nutzer eines Navigationssystems die ihn interessierende und für ihn hilfreiche Objektinformation in Abhängigkeit des aktuellen Fahrzeugstandortes in einer für den Nutzer übersichtlichen Art und Weise darzustellen.

Diese Aufgabe wird durch ein Verfahren mit den Merkmalen gemäß Anspruch 1 sowie durch ein Navigationssystem mit den Merkmalen gemäß Anspruch 9 gelöst.

Aus der EP-A 1 643 214 ist ein Verfahren zum Darstellen von Objektinformation zu Kartendaten einer digitalisierten Karte für ein Navigationssystem beschrieben, bei dem aktuelle Positionsdaten erfasst werden und anhand der Positionsdaten, der Kartendaten und der Objektinformation darstellbare Anzeigedaten erstellt und angezeigt werden, wobei die Anzeigedaten zusätzlich anhand einer Relevanz von Streckenabschnitten der digitalisierten Karte in Bezug auf die Positionsdaten erstellt werden.

Aus den Dokumenten DE 197 41 149 C1, US-A 5,293,163 und JP 09-259386 A sind jeweils Verfahren zum Darstellen von Objektinformation zu Kartendaten beschrieben, bei denen ebenfalls Anzeigedaten zusätzlich anhand einer Relevanz von Streckenabschnitten der digitalisierten Karte in Bezug auf die erfassten Positionsdaten erstellt werden.

Bei einem Verfahren der eingangs beschriebenen Art ist erfindungsgemäß vorgesehen, dass die Anzeigedaten zusätzlich anhand einer Relevanz von Streckenabschnitten der digitalisierten Karte in Bezug auf die Positionsdaten erstellt werden.

Hierdurch wird vermieden, dass der Nutzer des Navigationssystems für ihn unbedeutende Informationen wahrnimmt, durch die der Nutzer von für ihn wichtiger und verwertbarer Information abgelenkt wird. Da die Gesamtheit der dargestellten Information gleich bleiben kann, erhält der Fahrer mehr für ihn bedeutende Informationen, ohne dass die Präsentation der zusätzlichen Information in der Kartenanzeige den dargestellten Kartenausschnitt unübersichtlich werden lässt.

Erfindungsgemäß ist vorgesehen, dass zur Ermittlung der Relevanz die Wahrscheinlichkeit für eine Nutzung eines Streckenabschnittes berechnet wird. Die Nutzungswahrscheinlichkeit für einen Streckenabschnitt als unter bestimmten Annahmen berechenbare Größe wird hierbei als Indiz für die Bedeutung des Streckenabschnittes für den weiteren Verlauf der Wegstrecke herangezogen.

Bevorzugt wird bei dem erfindungsgemäßen Verfahren ausgehend von den aktuellen Positionsdaten und der aktuellen Bewegungsrichtung des Navigationssystems an Kreuzungspunkten, an denen sich mindestens zwei Streckenabschnitte kreuzen, ein relativer Wahrscheinlichkeitswert $P_{rel}$ jedem der Streckenabschnitte zugeordnet.

Weiterhin bevorzugt werden zur Ermittlung des relativen Wahrscheinlichkeitswertes $P_{rel}$ ein Fahrmanöverwahrscheinlichkeitswert $P_{Fahrmanöver, rel}$, ein Straßenklassenwahrscheinlichkeitswert $P_{Straßenklasse, rel}$, ein Routenwahrscheinlichkeitswert $P_{Route, rel}$ und/oder ein Fahrverbotswahrscheinlichkeitswert $P_{Fahrverbot}$ miteinander verknüpft. Hierdurch kann berücksichtigt werden, dass die Wahrscheinlichkeit an einer Kreuzung, geradeaus zu fahren oder der Straßenführung zu folgen, höher als die Wahrscheinlichkeit für ein Abbiegemanöver bzw. Verlassen der Straßeführung ist. Es kann weiterhin die Annahme berücksichtigt werden, dass das Befolgen einer Straße mit bestimmter Straßenklasse höher als ein Wechsel der Straßenklasse ist. Da von der Einhaltung der Straßenverkehrsordnung auszugehen ist, folgt für die Nutzung eines Streckenabschnittes mit einem Einfahrverbot, beispielsweise Fußgängerzone oder einer Einbahnstraße in Gegenrichtung, eine Nutzungswahrscheinlichkeit 0.

In vorteilhafter Weise ist bei dem erfindungsgemäßen Verfahren vorgesehen, dass die relativen Wahrscheinlichkeitswerte $P_{rel}$ für jeden Streckenabschnitt in einen absoluten Wahrscheinlichkeitswert $P_{abs}$ in Bezug auf die aktuellen Positionsdaten umgerechnet werden. Ferner, ist bei dem erfindungsgemäßen Verfahren vorgesehen, dass bei der Ermittlung der Relevanz nur die Streckenabschnitte berücksichtigt werden, die ausgehend von den aktuellen Positionsdaten über eine vorbestimmte, maximale Anzahl von Kreuzungspunkten erreicht werden können. Dies führt zu einer hervorgehobenen Darstellung der Objektinformation in der direkten Umgebung des Fahrzeugs mit dem Navigationssystem.

In vorteilhafter Weise wird die Relevanz der Streckenabschnitte jeweils für jede Fahrtrichtung ermittelt.

In vorteilhafter Weise werden in den Anzeigedaten als Objektinformation ein Straßenname, eine Straßenbezeichnung, ein öffentliches Gebäude, ein Point-of-Interest (POI) und/oder jegliche andere, geeignete Informationsdaten dargestellt.

Vorteilhaft wird in den Anzeigedaten die Objektinformation als Text, beispielsweise der Straßenname, und/oder als Piktogramm, beispielsweise ein Tankstellensymbol, dargestellt.

Bevorzugt wird bei der Erstellung der Anzeigedaten die Anordnung der darzustellenden Objektinformation in einem Ausschnitt der digitalisierten Karte anhand der Positionsdaten bestimmt. Hierdurch ist eine übersichtlichere Darstellung der Objektinformation in dem Kartenausschnitt möglich.

Nachfolgend wird die Erfindung anhand einer Ausführungsform unter Bezug auf die beigefügten Figuren beispielhaft näher erläutert, in denen:

Figur 1 eine schematisierte Skizze eines erfindungsgemäßen Navigationssystems zeigt,

Figur 2 ein Beispiel einer üblichen Darstellung eines Kartenausschnittes zeigt,

Figur 3 ein Beispiel einer erfindungsgemäßen Darstellung des Kartenausschnittes aus der Figur 2 zeigt,

Figur 4 den Kartenausschnitt aus der Figur 3 mit veränderten Positionsdaten zeigt,

Figur 5 eine vergrößerte Teilansicht des Kartenausschnitts aus der Figur 3 mit relativen Wahrscheinlichkeitswerten zeigt,

Figur 6 die Detailansicht der Figur 5 mit absoluten Wahrscheinlichkeitswerten zeigt,

Figur 7 die Detailansicht der Figur 5 mit möglichen Markierungspunkten zeigt und

Figur 8 die Detailansicht der Figur 7 mit einer optimierten Straßenbeschriftung zeigt.

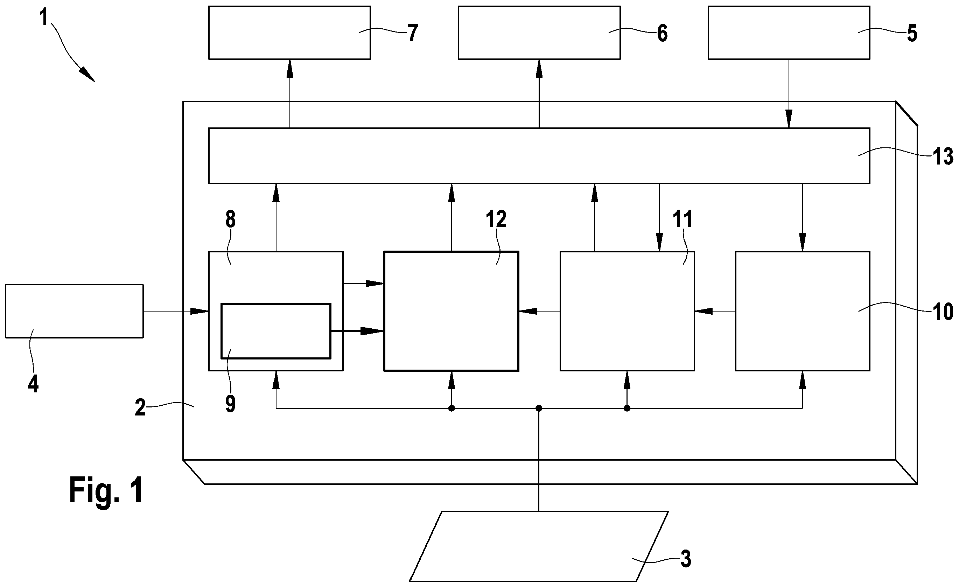

In Figur 1 ist ein erfindungsgemäßes Navigationssystem 1 in einer schematischen Skizze gezeigt. Das Navigationssystem 1 weist eine Datenverarbeitungseinrichtung 2 auf, beispielsweise einen mit einem Mikroprozessor versehenen Navigationsrechner, der von einem Massendatenspeicher 3 Kartendaten und Objektinformation erhält. Der Massendatenspeicher 3 kann eine CD-ROM, eine DVD, eine SD-Card oder jegliches andere, geeignetes Speichermedium sein.

Ferner ist die Datenverarbeitungseinrichtung 2 mit Sensoren 4 zur Positionsbestimmung verbunden. Dies können beispielsweise ein GPS-Empfänger oder jegliche andere zur Positionsbestimmung geeignete Sensoren sein. Mit der Datenverarbeitungseinrichtung 2 ist eine Eingabeeinrichtung 5 zur Bedienung und Zieleingabe durch einen Nutzer verbunden. Die Zielführung kann nach einer Routenberechnung optisch über eine Anzeige bzw. ein Display 6 und zusätzlich akustisch über einen Lautsprecher 7 ausgegeben werden.

In der Datenverarbeitungseinrichtung 2 sind für die unterschiedlichen Funktionen und Aufgaben der Datenverarbeitung einzelne Module eingezeichnet. Hierbei wertet das Modul Ortung 8 die von den Sensoren 4 empfangenen Positionsdaten aus. Innerhalb des Moduls Ortung 8 ist ein virtueller Positionshorizont 9 realisiert, der ausgehend von den aktuellen Fahrzeugpositionsdaten die Nutzungswahrscheinlichkeit sämtlicher Straßen in der Fahrzeugumgebung beschreibt. Der Positionshorizont kann zur Bestimmung der Wahrscheinlichkeiten berücksichtigen, dass der Fahrer die Straßenverkehrsordnung einhält und mit einer höheren Wahrscheinlichkeit der aktuell befahrenen Straße folgt.

Das Modul Index 10 enthält verschiedene Methoden für eine Zieleingabe über die Eingabevorrichtung 5. So können beispielsweise nach Eingabe einzelner Buchstaben nur die Buchstaben zur weiteren Eingabe angeboten werden, mit denen eine sinnvolle, weitere Zieleingabe möglich ist.

Die eigentliche Routenberechnung findet in dem Modul Routensuche 11 der Datenverarbeitungsvorrichtung 2 statt. Hierbei ist auch eine dynamische Routenberechnung denkbar, die zusätzlich zu Start- und Zielvorgaben und den Kartendaten, aktuelle Verkehrsmeldungen berücksichtigt. In diesem Fall ist eine Empfangseinrichtung (nicht dargestellt) für Verkehrsmeldungen, beispielsweise RDS-TMC-codierte Verkehrsmeldungen, vorgesehen.

In dem Modul Kartenanzeige 12 werden die Anzeigedaten zur Darstellung auf Grundlage der aktuellen Positionsbestimmung, der Kartendaten, der Objektinformation und gegebenenfalls der berechneten Route zur Anzeige auf dem Display 6 vorbereitet.

Die in der Figur mit Interface bezeichnete Schnittstelle 13 hat die Funktion, die Datenströme zwischen der Datenverarbeitungseinrichtung 2 und den Ein- bzw. Ausgabeeinrichtungen 5, 6, 7 zu steuern.

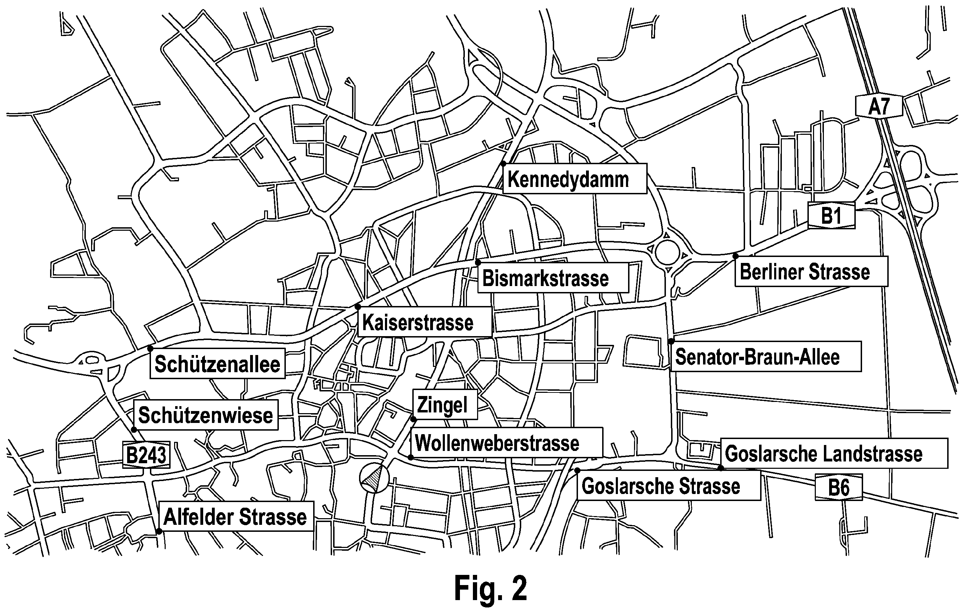

In der Figur 2 ist eine übliche Darstellung eines Kartenausschnittes für ein Navigationssystem dargestellt. Das Fahrzeug mit dem mobilen Navigationssystem 1 (Figur 1) befindet sich an der markierten Stelle in der Wollenweberstraße. Die Markierung der Fahrzeugposition erfolgt durch einen in einem Kreis angeordneten Pfeil, dessen Pfeilspitze die genaue Position und die Richtung der Pfeilspitze die Fahrtrichtung andeutet.

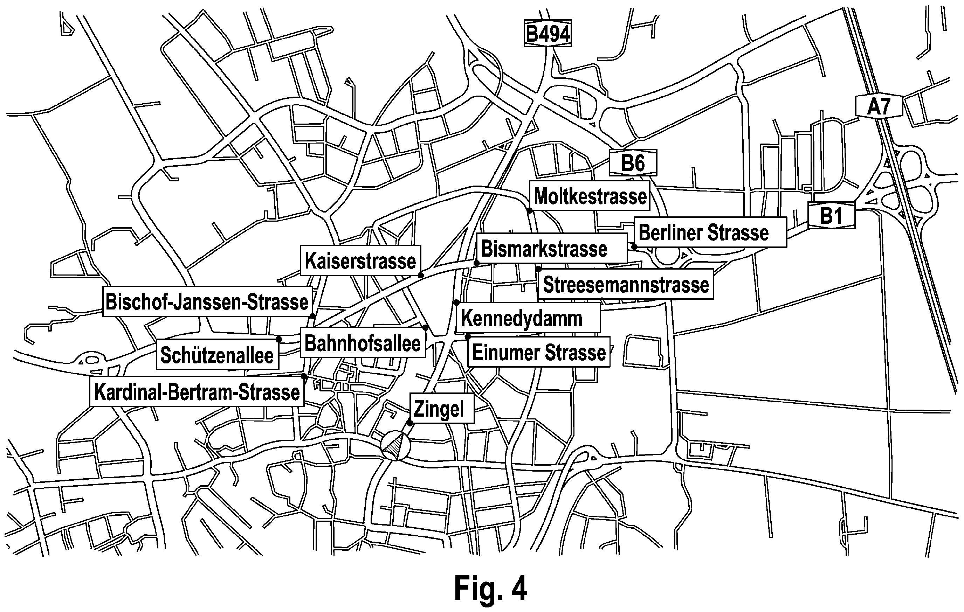

In der Darstellung der Figur 2 werden die wichtigsten Straßen, wie Autobahnen und Bundesstraßen, mit einem Straßennummernsymbol versehen, beispielsweise A7 und B1. Da der Zahlenwert der Straßennummer in vielen Fällen mit der Bedeutung korreliert, werden vorzugsweise die Straßen mit einer kleinen Nummer mit einem Symbol versehen. So wird in dieser Darstellung die B 494 (siehe später Figur 4) nicht markiert.

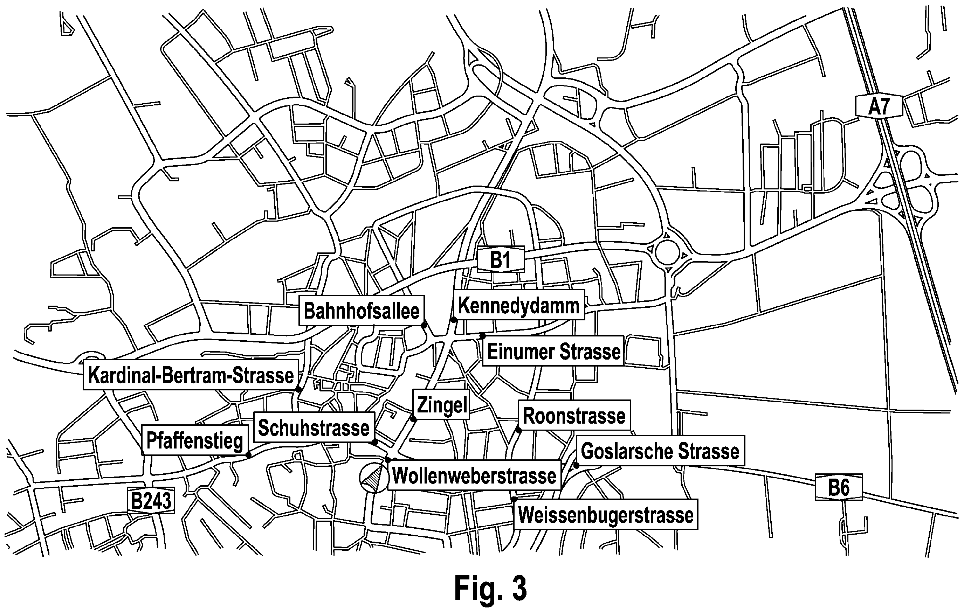

Neben der Markierung mit Straßennummernsymbol werden nur die wichtigsten Straßen mit ihren Straßennamen in der Karte beschriftet. Es werden zwar die entfernten Straßen, beispielsweise die Schützenallee oder die Berliner Straße, mit ihren Straßennamen versehen, aber die unmittelbaren Querstraßen, beispielsweise die Schuhstraße (siehe später Figur 3), bleiben in dieser Darstellung unberücksichtigt. Lediglich für die aktuell befahrene Straße, in diesem Fall die Wollenweberstraße, erfolgt eine Ausnahme und diese wird unabhängig von der Bedeutung immer beschriftet und mit ihrem Straßennamen bezeichnet.

Des Weiteren werden die Beschriftungs- bzw. Markierungspunkte, d.h. die Punkte in dem Kartenausschnitt, an denen die Objektinformation angeordnet bzw. positioniert ist, auf einem Streckenabschnitt unabhängig von der Bedeutung für den Fahrer gewählt. Die Auswahl dieses Punktes orientiert sich ausschließlich an der Darstellbarkeit und wird meistens auf einem Punkt auf etwa der Hälfte der Straße festgelegt.

Figur 3 zeigt den Kartenausschnitt der digitalisierten Karte aus der Figur 2 und die maximale Anzahl der zu markierenden Kartenelemente wird in der Darstellung der Figur 3 beibehalten. Im Gegensatz zum üblichen Verfahren werden erfindungsgemäß vorzugsweise die relevanten Straßen in der Umgebung des Fahrzeugs markiert bzw. bezeichnet.

Da die Anzahl der zu markierenden Straßen mit Symbolen konstant bleibt und die Wahrscheinlichkeit für die Nutzung der B 494 am geringsten ist, erfolgt auch in dieser Darstellung mit den aktuellen Positionsdaten deren Markierung weiterhin nicht. Die Bezeichnung mit Straßennamen ist auf die Fahrzeugumgebung eingeschränkt und die Klassifikation der Straßen spielt hier nicht mehr die absolute Rolle. Die aktuell befahrene Straße, Wollenweberstraße, wird wie zuvor weiterhin mit ihrem Straßennamen in der Karte angezeigt.

An den nächsten erreichbaren Kreuzungen werden sämtliche Querstraßen einer bestimmten Minimalklassifikation mit ihrem Straßennamen beschriftet. Dies sind in diesem Beispiel die Schuhstraße, der Zingel und die Goslarsche Straße. Weiterhin werden in diesem Beispiel aufgrund der konstanten maximalen Anzahl der zu beschriftenden Straßen die Straßennamen der Bundesstraßenabschnitte jedoch nicht mehr beschriftet. Dadurch können die Symbole zur Kennzeichnung der Straßennummer stärker in die Fahrzeugnähe positioniert werden. Dies betrifft in diesem Beispiel die Bismarckstraße (siehe Figur 2), die in Figur 3 lediglich als B 1 bezeichnet ist.

In Figur 4 wird wiederum der gleiche Kartenausschnitt der digitalisierten Karte gezeigt, die Position des Fahrzeugs hat sich jedoch verändert, weshalb sich auch die Nutzungswahrscheinlichkeiten der Straßen in der Umgebung deutlich verschoben haben. Nach dem Überfahren der Kreuzung ist ein Abbiegen in die Schuhstraße (siehe Figur 3) nicht möglich und die B 243 ist dadurch schlechter zu erreichen. Eine Bezeichnung der B 243 entfällt daher, stattdessen wird nun die B 494 bezeichnet. Die Darstellung berücksichtigt in erster Linie die Straßen, die in Fahrtrichtung vor dem Fahrzeug liegen und bequem erreicht werden können, während die hinter dem Fahrzeug zurückgelassenen Straßen weitgehend unberücksichtigt bleiben.

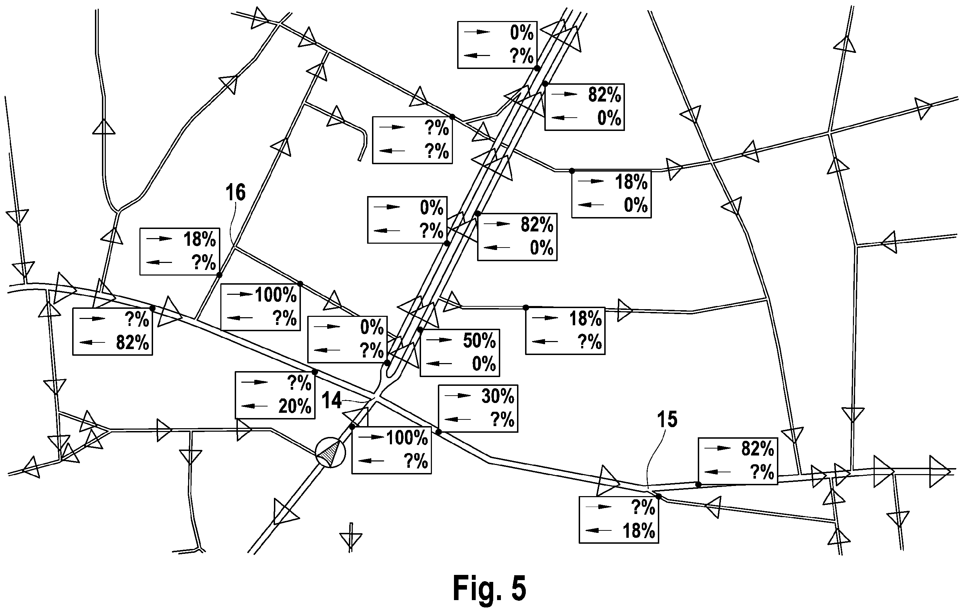

In der Figur 5 ist eine vergrößerte Detailansicht des Kartenausschnitts und der Fahrzeugposition gemäß Figur 3 dargestellt, d.h. vor dem Fahrzeug befindet sich eine Kreuzung 14, an der der Fahrer nach links in die Schuhstraße, nach rechts in die Goslarsche Straße oder geradeaus in den Zingel fahren kann. Der Streckenabschnitt, auf dem sich das Fahrzeug gemäß Figur 5 befindet, hat eine relative Wahrscheinlichkeit von 100 %, da ein Abbiegen und Verlassen dieser Straße bis zu der Kreuzung 14 nicht möglich ist.

Die relativen Wahrscheinlichkeiten berücksichtigen, dass der Fahrer mit der größten Wahrscheinlichkeit, beispielsweise 50 %, dem Straßenverlauf folgt. Für ein Linksabbiegen wird eine Wahrscheinlichkeit von 20 % angenommen und für ein Rechtsabbiegen eine Wahrscheinlichkeit von 30 %. Dies entspricht jedoch nur den relativen Wahrscheinlichkeiten bei einer Kreuzung von gleichwertigen Straßen bei einer Einteilung in mehrere Straßenklassen.

Im weiteren Verlauf der Goslarschen Straße ist eine Kreuzung 15 dargestellt, in der eine Rechtsabbiegemöglichkeit mit einem Wechsel der Straßenklasse möglich ist. Basierend auf den Anteilen für den Wechsel der Straßenklasse und des Fahrmanövers, sowie der Berücksichtigung der berechneten Route und der Straßenverkehrsordnung lässt sich die relative Wahrscheinlichkeit für die nachfolgende Straße richtungsabhängig berechnen. Hierbei gilt die folgende Gleichung:

$$P_{rel} = P_{Fahrmanöver,\ rel} \cdot P_{Straßenklasse,\ rel} \cdot P_{Route,\ rel} \cdot P_{Fahrverbot}$$

Der Wahrscheinlichkeitswert $P_{Fahrverbot}$ beträgt 1 wenn kein Fahrverbot besteht, dieser Faktor ist bezüglich einer Multiplikation als Verknüpfung neutral. Der Wahrscheinlichkeitswert $P_{Fahrverbot}$ beträgt 0 im Falle eines Fahrverbotes, so dass unabhängig von den weiteren Wahrscheinlichkeitswerten die relative Wahrscheinlichkeit zu 0 wird. Dies wird beispielsweise bei der Kreuzung 16 deutlich, bei der von Süden kommend nur ein Rechtsabbiegen zulässig ist, da nördlich der Kreuzung 16 eine Fußgängerzone beginnt.

Die Nutzungswahrscheinlichkeiten werden für beide Richtungen der Straße bestimmt. In der Darstellung werden die Werte entsprechend der angezeigten Richtung (Digitalisierungsrichtung der Kartendaten auf dem Speichermedium) angeben, so bedeutet → Berücksichtigung entsprechend der Digitalisierungsrichtung und ← eine Berücksichtigung in Gegenrichtung. Das Fragezeichen (?) deutet an, dass für diese Straße in die entsprechende Richtung kein Wert derzeit berechnet wurde.

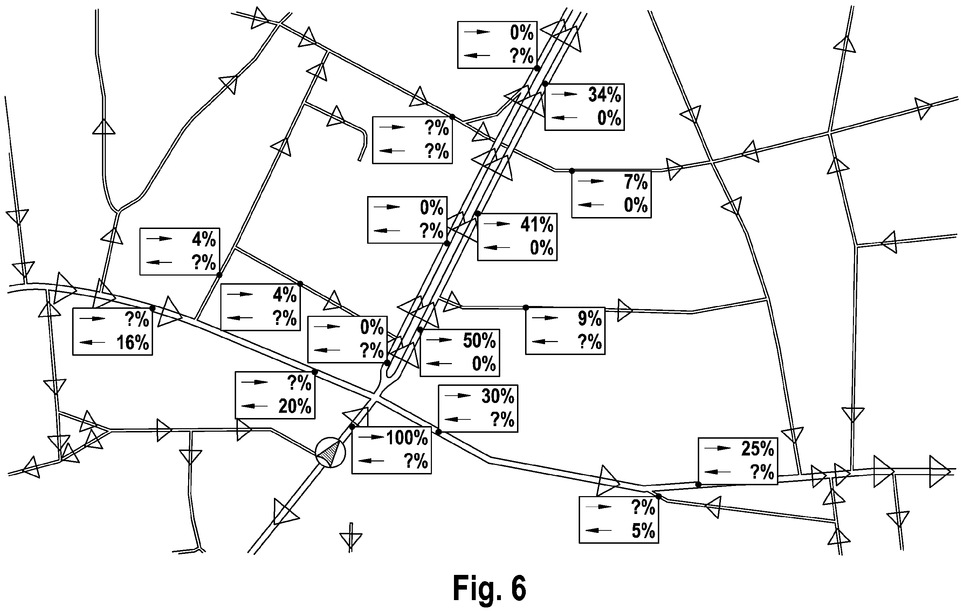

Die Berechnung der relativen Wahrscheinlichkeitswerte berücksichtigt jeweils nur die nächstliegende Kreuzung der entsprechenden Streckenabschnitte. Für eine sinnvolle Darstellung der Nutzungswahrscheinlichkeit in Abhängigkeit der Fahrzeugposition müssen die relativen Wahrscheinlichkeiten in dem Positionshorizont 9 (siehe Figur 1) durch Aufsummierung für jede mögliche Route in absolute Wahrscheinlichkeitswerte $P_{abs}$ umgerechnet werden. Die relativen Wahrscheinlichkeitswerte $P_{rel}$ in dem Kartenausschnitt der Figur 5 sind in der Figur 6 in absolute Wahrscheinlichkeitswerte $P_{abs}$ umgerechnet wiedergegeben. Diese absoluten Wahrscheinlichkeitswerte in dem Positionshorizont 9 beschreiben die Nutzungswahrscheinlichkeiten von Streckenabschnitten im Straßennetz und stellen die Basis für das Verfahren der Markierung bzw. Bezeichnung der relevanten Kartenelemente dar.

Die Markierungs- bzw. Beschriftungspunkte für die Kartenelemente zur Anordnung der Objektinformation werden durch das nachfolgend beschriebene Selektionsverfahren unter Berücksichtigung der Klassifikation und der Nutzungswahrscheinlich bestimmt und in einer Liste zwischengespeichert. Nach dem eigentlichen Zeichnen der Kartenelemente erfolgt die Bezeichnung der Kartenelemente an den in der Liste gespeicherten Punkten mit der entsprechenden Objektinformation.

Durch die Klassifikation von Kartenelementen werden ähnliche Elemente hinsichtlich ihrer allgemeinen Bedeutung gruppiert. Die Elemente der gleichen Klassen werde nach einem gleichen Schema, beispielsweise mit einem gleichen Icontyp oder mit einer Linie der gleichen Farbe und/oder Breite, auf dem Display 6 (Figur 1) dargestellt. Diese Gruppierung hat aber gegenüber der individuellen Nutzungswahrscheinlichkeit einen höheren Stellenwert, da sich die primäre Darstellung an unterschiedliche Kartenelementklassen ausrichtet. Eine Besonderheit ergibt sich jedoch für die aktuell befahrene Straße, die unabhängig von ihrer Klassifikation zu berücksichtigen ist. Beim Selektionsverfahren wird zunächst der Markierungspunkt der aktuell befahrenen Straße bestimmt, bevor die anderen Kartenelemente entsprechend ihrer Kartenelementklasse behandelt werden.

Die Bearbeitung der Kartenelementklassen erfolgt dabei für sämtliche Klassen entsprechend einer vorgegebenen Priorität, welche der für die allgemeine Kartendarstellung entspricht. Begonnen wird mit der bedeutendsten Kartenelementklasse. Nachdem die Markierungspunkte der Kartenelemente der aktuellen Klasse bestimmt wurden, wird mit der nächst geringer bedeutenden Klassifikation fortgefahren. Es werden sämtliche Kartenelementklassen bis zu der am wenigsten bedeutendsten Klassifikation behandelt, solange die maximale Anzahl der zu markierenden Kartenelemente noch nicht erreicht wurde.

Es erfolgt die Bearbeitung für sämtliche Kartenelemente (mit gleicher Klassifikation) entsprechend der berechneten absoluten Wahrscheinlichkeitswerte $P_{abs}$. Begonnen wird mit dem Kartenelement, welches für eines seiner Streckenabschnitte den größten absoluten Wahrscheinlichkeitswert $P_{abs}$ aufweist. Für das aktuelle Kartenelement wird der Markierungspunkt unter Berücksichtigung der Darstellbarkeit ermittelt. Im Anschluss wird die Überarbeitung für das Kartenelement mit dem nächst kleineren absoluten Wahrscheinlichkeitswert $P_{abs}$ fortgesetzt. Es werden sämtliche Kartenelemente bis zu dem kleinsten berechneten Wahrscheinlichkeitswert behandelt, solange die maximale Anzahl der zu markierenden Kartenelemente noch nicht erreicht wurde. Der aktuell berechnete Markierungspunkt wird hinsichtlich der Darstellbarkeit im relevanten Kartenausschnitt noch überprüft.

Der absolute Wahrscheinlichkeitswert $P_{abs}$ für die Nutzung eines Streckenabschnittes einer Straße in der direkten Nähe zum Fahrzeug ist meist sehr groß, so dass vorzugsweise in diesem Umfeld Markierungspunkte bestimmt werden würden. Diese Verwendung dieser würde jedoch zu einer Unübersichtlichkeit führen, so dass in diesem Bereich der direkten Nähe keine Markierungspunkte mit der einzigen Ausnahme des Markierungspunktes für die aktuell befahrene Straße verwendet werden dürfen.

Für die Markierung von Straßen mit Namen oder Nummern ist eine Überlagerung der Objektinformation nicht erlaubt, da aufgrund der dabei entstehenden unzureichenden Lesbarkeit die Markierung unnütz ist. Im Gegensatz dazu kann aber eine teilweise überdeckte Markierung von Point-of-Interest mit einem Piktogramm, beispielsweise von Parkplätzen oder Tankstellen, durchaus akzeptabel sein.

Für Linienelemente bzw. Flächen werden die Markierungspunkte möglichst mittig angeordnet, da die Markierung am Anfang oder Ende bzw. am Rand zu Verwechslungen mit anderen Markierungspunkten führen kann.

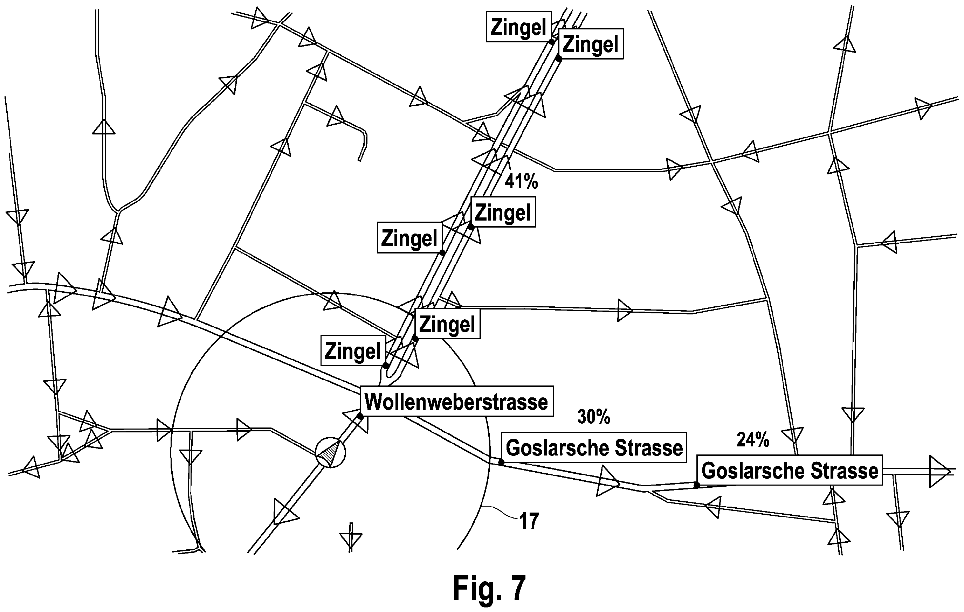

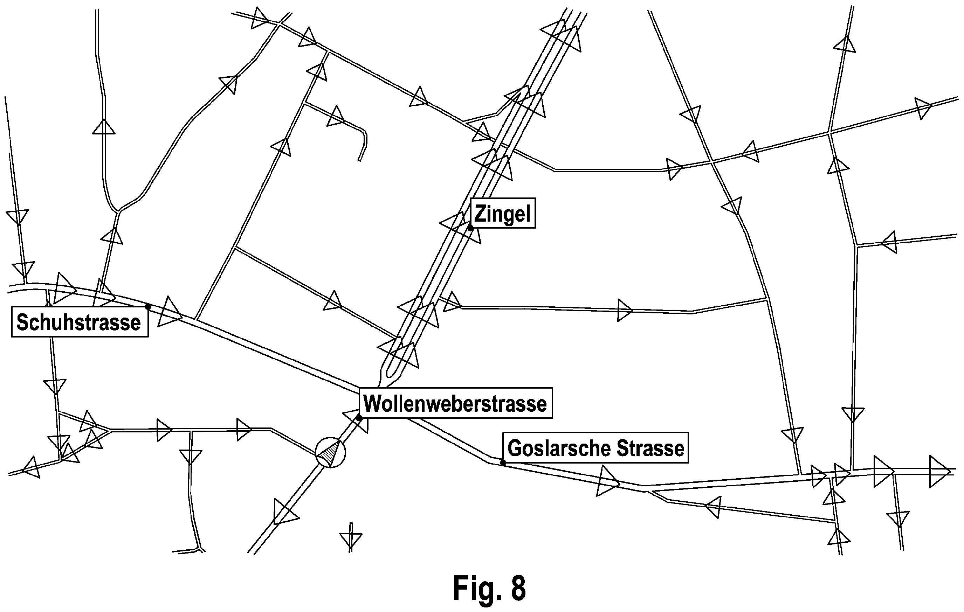

Der aktuell berechnete Markierungspunkt darf nur verwendet werden, d. h. in der Liste der Markierungspunkte gespeichert werden, wenn die benannten, vorstehend aufgeführten Regeln erfüllt sind. Falls der Markierungspunkt die vorgegebenen Regeln nicht erfüllt, wird ein neuer Markierungspunkt für den Abschnitt mit der nächst kleineren Nutzungswahrscheinlich bestimmt. Dies wird nachfolgend anhand der Figuren 7 und 8 näher erläutert.

Die aktuell befahrene Straße, die Wollenweberstraße, wird unabhängig von der Nähe zu den aktuellen Positionsdaten beschriftet. Der Markierungspunkt für die Goslarsche Straße liegt außerhalb des Grenzradius 17 um den aktuellen Fahrzeugstandort und kann zur Bezeichnung verwendet werden. Die in Fahrtrichtung und dem Straßenverlauf folgende Straße Zingel hat Markierungspunkte, die innerhalb des Grenzradius 17 liegen. Eine Bezeichnung des Streckenabschnittes an diesen Markierungspunkten ist nicht zulässig, so dass der nächstliegende Markierungspunkt mit dem höchsten absoluten Wahrscheinlichkeitswert $P_{abs}$ zur Darstellung herangezogen wird. Figur 8 zeigt die Situation, nachdem alle Straßen sämtlicher zu berücksichtigenden Klassifikationen behandelt wurden.

Aufgrund des hier vorgestellten Verfahrens ist es möglich, die Kartenanzeige deutlich aufzuwerten. So wird generell durch die Markierung bzw. Beschriftung von Kartenelementen deren Bedeutung hervorgehoben, wodurch die Aufmerksamkeit des Nutzers auf diese Kartenelemente konzentriert wird. Dabei ist es von großer Bedeutung, die relevanten Kartenelemente an geeigneten Stellen zu markieren. Somit werden nur die Kartenelemente bezeichnet, die für den Fahrer von Interesse sind, da er diese demnächst erreichen wird bzw. kann. Durch die Verringerung von irrelevanten Markierungen wird die Ablenkung des Fahrers durch das System reduziert. Dadurch hilft die optimierte Präsentation der Objektinformationen dem Fahrer, sich besser auf den Straßenverkehr zu konzentrieren und somit allgemein zur Verkehrssicherheit beizutragen.

**Patentansprüche**

1. Verfahren zum Darstellen von Objektinformation zu Kartendaten einer digitalisierten Karte für ein Navigationssystem eines Fahrzeugs, bei dem aktuelle Positionsdaten des Fahrzeugs mit dem Navigationssystem erfasst werden und anhand der Positionsdaten, der Kartendaten und der Objektinformation darstellbare Anzeigedaten erstellt und angezeigt werden, wobei die Anzeigedaten zusätzlich anhand einer Relevanz von Streckenabschnitten der digitalisierten Karte in Bezug auf die Positionsdaten erstellt werden, **dadurch gekennzeichnet, dass** zur Ermittlung der Relevanz die Wahrscheinlichkeit für eine Nutzung eines Streckenabschnittes berechnet wird und dass bei der Ermittlung der Relevanz nur die Streckenabschnitte berücksichtigt werden, die ausgehend von den aktuellen Positionsdaten über eine vorbestimmte, maximale Anzahl von Kreuzungspunkten erreicht werden können.

2. Verfahren nach Anspruch 1, **dadurch gekennzeichnet, dass** ausgehend von den aktuellen Positionsdaten und der aktuellen Bewegungsrichtung des Navigationssystems an Kreuzungspunkten, an denen sich mindestens zwei Streckenabschnitte kreuzen, ein relativer Wahrscheinlichkeitswert $P_{rel}$ jedem der Streckenabschnitte zugeordnet wird.

3. Verfahren nach Anspruch 2, **dadurch gekennzeichnet, dass** zur Ermittlung des relativen Wahrscheinlichkeitswertes $P_{rel}$ ein Fahrmanöverwahrscheinlichkeitswert $P_{Fahrmanöver, rel}$, ein Straßenklassenwahrscheinlichkeitswert,

$P_{\text{Straßenklasse, rel}}$, ein Routenwahrscheinlichkeitswert $P_{\text{Route, rel}}$ und/oder ein Fahrverbotswahrscheinlichkeitswert $P_{\text{Fahrverbot}}$ miteinander verknüpft werden.

4. Verfahren nach Anspruch 2 oder 3, **dadurch gekennzeichnet, dass** die relativen Wahrscheinlichkeitswerte $P_{\text{rel}}$ für jeden Streckenabschnitt in einen absoluten Wahrscheinlichkeitswert $P_{\text{abs}}$ in Bezug auf die aktuelle Positionsdaten umgerechnet werden.

5. Verfahren nach einem der vorstehenden Ansprüche, **dadurch gekennzeichnet, dass** die Relevanz der Streckenabschnitte jeweils für jede Fahrtrichtung ermittelt wird.

6. Verfahren nach einem der vorstehenden Ansprüche, **dadurch gekennzeichnet, dass** in den Anzeigedaten als Objektinformation ein Straßenname, eine Straßenbezeichnung, ein öffentliches Gebäude ein Point-of-Interest (POI) und/oder jegliche andere, geeignete Informationsdaten dargestellt werden.

7. Verfahren nach einem der vorstehenden Ansprüche, **dadurch gekennzeichnet, dass** in den Anzeigedaten die Objektinformation als Text und/oder als Piktogramm dargestellt wird.

8. Verfahren nach einem der vorstehenden Ansprüche, **dadurch gekennzeichnet, dass** bei der Erstellung der Anzeigedaten die Anordnung der darzustellenden Objektinformation in einem Ausschnitt der digitalisierten Karte anhand der Positionsdaten bestimmt wird.

9. Navigationssystem für ein Fahrzeug, ausgebildet zum Durchführen des Verfahrens nach einem der Ansprüche 1 bis 8 mit einer Einrichtung zur Erfassung von aktuellen Positionsdaten des Fahrzeugs, einer Datenspeichereinrichtung für Kartendaten einer digitalisierten Karte und für Objektinformation, einer Datenverarbeitungseinrichtung, die eingerichtet ist, anhand der Positionsdaten, der Kartendaten, der Objektinformation und der Relevanz von Streckenabschnitten der digitalisierten Karte in Bezug auf die aktuellen Positionsdaten darstellbare Anzeigedaten zu erstellen, und einer Anzeigeeinrichtung für die erstellten Anzeigedaten.

**Claims**

1. Method for presenting object information pertaining to map data of a digitized map for a navigation system of a vehicle, in which current position data of the vehicle are captured using the navigation system and the position data, the map data and the object information are used to create and to display presentable display data, wherein the display data are additionally created on the basis of a relevance of road sections of the digitized map in relation to the position data, **characterized in that** the relevance is ascertained by computing the probability of use of a road section and **in that** ascertainment of the relevance takes into consideration only the road sections that can be reached via a predetermined maximum number of junctions on the basis of the current position data.

2. Method according to Claim 1, **characterized in that** a relative probability value $P_{\text{rel}}$ is associated with each of the road sections on the basis of the current position data and the current direction of movement of the navigation system at junctions at which at least two road sections cross.

3. Method according to Claim 2, **characterized in that** the relative probability value $P_{\text{rel}}$ is ascertained by combining a driving manoeuvre probability value $P_{\text{Driving manoeuvre, rel}}$, a road class probability value $P_{\text{Road class, rel}}$, a route probability value $P_{\text{Route, rel}}$ and/or a driving prohibition probability value $P_{\text{Driving prohibition}}$.

4. Method according to claim 2 or 3, **characterized in that** the relative probability values $P_{\text{rel}}$ for each road section are converted into an absolute probability value $P_{\text{abs}}$ in relation to the current position data.

5. Method according to one of the preceding claims, **characterized in that** the relevance of the road sections is ascertained for each direction of travel each time.

6. Method according to one of the preceding claims, **characterized in that** the object information presented in the display data is a road name, a road designation, a public building, a point of interest (POI) and/or any other suitable information data.

7. Method according to one of the preceding claims, **characterized in that** the object information is presented in the display data as text and/or as a pictogram.

8. Method according to one of the preceding claims, **characterized in that** creation of the display data involves the arrangement of the object information to be presented in a detail of the digitized map being determined on the basis of the position data.

9. Navigation system for a vehicle, designed to perform the method according to one of Claims 1 to 8 with a device for capturing current position data of the vehicle, a data storage device for map data of a digitized map and for object information, a data processing device that is set up to use the position data, the map data, the object information and the relevance of road sections of the digitized map in relation to the current position data to create presentable display data, and a display device for the display data created.

**Revendications**

1. Procédé d'affichage d'informations d'objets concernant des données cartographiques d'une carte numérisée pour un système de navigation d'un véhicule, dans lequel des données de position actuelles du véhicule sont détectées au moyen du système de navigation et des données d'affichage pouvant être représentées sont établies et affichées sur la base des données de position, des données cartographiques et des informations d'objets, dans lequel les données d'affichage sont en outre établies sur la base d'une pertinence de sections d'itinéraire de la carte numérisée par rapport aux données de position, **caractérisé en ce que**, pour déterminer la pertinence, la probabilité d'une utilisation d'une section d'itinéraire est calculée et **en ce que**, lors de la détermination de la pertinence, seules sont prises en compte les sections d'itinéraire qui peuvent être atteintes à partir des données de position actuelles par l'intermédiaire d'un nombre prédéterminé maximum de points de croisement.

2. Procédé selon la revendication 1, **caractérisé en ce que**, à partir des données de position actuelles et de la direction de déplacement actuelle du système de navigation en des points de croisements auxquels au moins deux sections d'itinéraire se croisent, une probabilité relative $P_{rel}$ est associée à chacune des sections d'itinéraire.

3. Procédé selon la revendication 2, **caractérisé en ce que**, pour déterminer la probabilité relative $P_{rel}$, une valeur de probabilité de manoeuvre de conduite $P_{Fahmanöver, rel}$, une valeur de probabilité de classe de rue, $P_{strasenklasse, rel}$, une valeur de probabilité d'itinéraire $P_{Route,rel}$, et/ou une valeur de probabilité d'interdiction de circuler $P_{Fahrverbot}$ sont combinées les unes aux autres.

4. Procédé selon la revendication 2 ou 3, **caractérisé en ce que** les valeurs de probabilité relatives $P_{rel}$ concernant chaque section d'itinéraire sont converties en une valeur de probabilité absolue $P_{abs}$ par rapport aux données de position actuelles.

5. Procédé selon l'une quelconque des revendications précédentes, **caractérisé en ce que** la pertinence des sections d'itinéraire est respectivement déterminée pour chaque direction de conduite.

6. Procédé selon l'une quelconque des revendications précédentes, **caractérisé en ce qu'**un nom de rue, une désignation de rue, un bâtiment public, un point d'intérêt (POI) et/ou d'autres informations appropriées quelconques sont représentés dans les données d'affichage en tant qu'informations d'objet.

7. Procédé selon l'une quelconque des revendications précédentes, **caractérisé en ce que** l'information d'objet est représentée sous forme de texte et/ou sous forme de pictogramme dans les données d'affichage.

8. Procédé selon l'une quelconque des revendications précédentes, **caractérisé en ce que**, lors de l'établissement des données d'affichage, l'agencement de l'information d'objet à représenter est déterminé dans une partie de la carte numérisée sur la base des données de position.

9. Système de navigation destiné à un véhicule, conçu pour mettre en oeuvre le procédé selon l'une quelconque des revendications 1 à 8, comportant un dispositif destiné à détecter des données de position actuelles du véhicule, un dispositif de stockage de données destiné à des données cartographiques d'une carte numérisée et à des informations d'objets, un dispositif de traitement de données qui est conçu pour établir, sur la base des données de position, des données cartographiques, des informations d'objets et de la pertinence de sections d'itinéraire de la carte numérisée par rapport aux données de position actuelles, des données d'affichage pouvant être représentées, et un dispositif d'affichage destiné aux données d'affichage établies.

Fig. 1

**Fig. 2**

Fig. 3

**Fig. 4**

EP 1 890 112 B1

Fig. 5

Fig. 6

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10337844 A1
- EP 1643214 A
- DE 19741149 C1
- US 5293163 A
- JP 9259386 A